# EUROPÄISCHE PATENTSCHRIFT

(11) **EP 0 754 534 B1**
(45) Veröffentlichungstag und Bekanntmachung des Hinweises auf die Patenterteilung: **22.09.1999**
(21) Anmeldenummer: 96111233.1
(22) Anmeldetag: 12.07.1996
(51) Int. Cl.: B29C 45/17, B30B 15/04

(54) **Einrichtung zum Spritzgiessen von Kunststoff**
Apparatus for plastic injection moulding
Dispositif de moulage par injection de matière plastique

(30) Priorität: 19.07.1995 AT 39795 U
(43) Veröffentlichungstag der Anmeldung: 22.01.1997
(73) Patentinhaber: Engel Maschinenbau Gesellschaft m.b.H., A-4311 Schwertberg (AT)
(72) Erfinder: Wimbauer, Gerhard, 4311 Schwertberg (AT)
(74) Vertreter: Hofinger, Engelbert, Dr.Dr.

(56) Entgegenhaltungen:
- EP-A- 0 311 133
- EP-A- 0 554 068
- WO-A-95/04643
- DE-U- 9 212 480

## Beschreibung

Die Erfindung bezieht sich auf eine Einrichtung zum Spritzgießen von Kunststoff mit einer ortsfesten und einer verfahrbaren Formaufspannplatte, welche Einrichtungen zur Festlegung je einer Formhälfte und damit zur Festlegung der horizontalen Mittelebene der Form aufweisen, wobei mindestens eine Formaufspannplatte relativ zum Maschinenrahmen um eine mittig angeordnete horizontale Achse schwenkbar ist.

In jüngster Zeit sind mehrere derartige Einrichtungen vorgeschlagen worden (vgl. beispielsweise DE 9212480 U). Die gelenkige Lagerung mindestens einer der Formaufspannplatten hat dabei den Zweck, die Orientierung dieser Platte unabhängig von Verformungen des zugehörigen vertikalen Schenkels des Maschinenrahmens zu machen, wie sie bei holmlosen Maschinen auftreten können. Weist jede Formaufspannplatte ein Gelenk auf, so behalten beim Aufbringen des Schließdruckes die beiden Formaufspannplatten und die daran befestigten Formhälften ihre Orientierung im Raum bei. Eine besonders einfache Konstruktion zeigt EP 311 133 B2, bei welcher nur die verfahrbare Formaufspannplatte kippbar gelagert ist. Hier wird die Plattenparallelität dadurch erreicht, daß die verfahrbare Formaufspannplatte die Verschwenkung der ortsfesten Formaufspannplatte mitmacht. Der Winkel, um den sich das Drehgelenk verschwenkt, entspricht damit der Summe der Verschwenkungen der beiden vertikalen Schenkel des Maschinenrahmens.

Die Bewegung der jeweils vorgesehenen Drehgelenke erfolgt nach dem Schließen der Form entsprechend der durch die Schließkraft erzeugten Verformung des Maschinenrahmens. Hiebei muß von der am Drehgelenk befestigten Platte ein Moment auf das Drehgelenk ausgeübt werden, um die Lagerreibung zu überwinden.

Die horizontale Verschwenkbarkeit der Formplatte muß nicht durch ein zweiteiliges Drehgelenk ermöglicht sein; auch ein elastisch verformbarer Teil zwischen Formplatte und Maschinenrahmen kann die Verschwenkung der Formplatte erlauben.

Der Erfindung liegt die Aufgabe zugrunde, ein definiertes Drehmoment zur Verschwenkung der Formplatte zu schaffen.

Dies wird erfindungsgemäß durch die Einrichtung nach Anspruch 1 erreicht. Eine die horizontale Schwenkachse der Formaufspannplatte bildende Einrichtung ist dabei gegenüber der horizontalen Mittelebene der Form nach oben versetzt. Der Betrag, um den die Schwenkachse versetzt wird, ist gering, die Achse verbleibt im Mittelbereich. Erfolgt die Verschwenkung mittels eines aus Gelenkschale und Gelenkzapfen bestehenden Drehgelenkes, ergibt sich üblicherweise, daß die Achse des Drehgelenkes mit einem Abstand oberhalb der horizontalen Mittelebene der Form verläuft, welcher kleiner ist als der halbe Radius des Drehgelenkes. Auch wenn verformbare Teile verwendet werden, um die Verschwenkung der Formplatte zu ermöglichen, verläuft die horizontale Mittelebene der Form bei erfindungsgemäßen Einrichtungen durch den verformbaren Teil.

Der besondere Vorteil der Erfindung liegt darin, daß ein Drehmoment zur Verschwenkung der Formplatte erzeugt wird, obwohl die Schließkraft zentral in die Form eingeleitet wird und die von der Form ausgeübte Reaktionskraft ebenfalls in der Mittelebene der Form verbleibt.

Zweckmäßige Weiterbildungen der Erfindung sind Gegenstand der abhängigen Ansprüche.

Ausführungsbeispiele der Erfindung werden anschließend anhand der Zeichnungen erläutert. In diesen zeigen:
Fig. 1 den Aufbau einer bekannten Spritzgießmaschine mit zwei Gelenken,
Fig. 2 eine konventionelle Möglichkeit für die Festlegung einer Formhälfte an einer Formaufspannplatte und
Fig. 3 eine schematische Teilansicht einer Maschine mit nur einem Drehgelenk,
Fig. 4 eine Einrichtung gemäß Fig. 3 mit verformbarem Gelenkteil,
Fig. 5 eine Einrichtung gemäß Fig. 1 mit verformbaren Gelenkteilen.

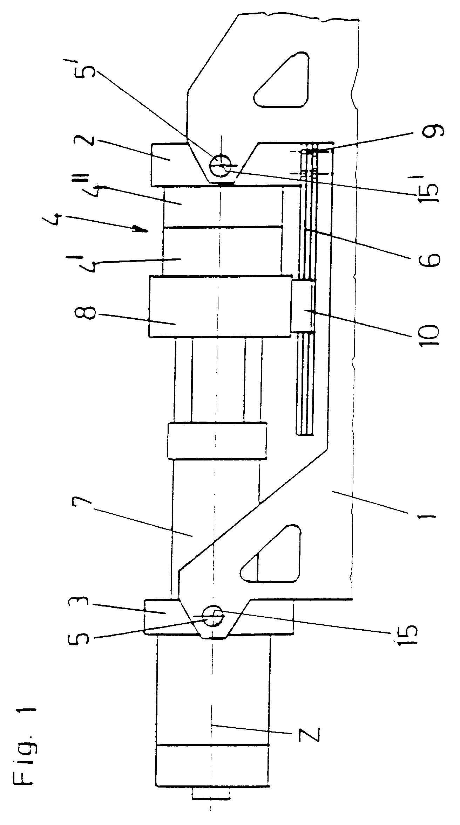

Ein wesentlicher Teil der Spritzgießmaschine nach Fig. 1 ist der Maschinenrahmen 1, der ortsfest die Formaufspannplatte 2 und die Zylinderplatte 3 trägt. Das heißt, die ortsfeste Formaufspannplatte 2 und die Zylinderplatte 3 sind am Maschinenrahmen 1 auf Drehgelenken 5 um horizontale Achsen drehbar gelagert.

Die ortsfeste Formaufspannplatte 2 und die bewegbare Formaufspannplatte 8 tragen die Form, die aus den Formhälften 4', 4'' besteht.

An der Rückseite der ortsfesten Formaufspannplatte 2 ist das Einspritzaggregat mit dem Zuführtrichter angeordnet. Das Einspritzaggregat und der Zuführtrichter sind jedoch in den Figuren der Zeichnungen nicht gezeigt. Sie bilden nicht Gegenstand der Erfindung und sind nach dem Stand der Technik gefertigt.

Die Zylinderplatte 3 trägt eine Kolben-Zylindereinheit 7, die ihrerseits die verfahrbare Formaufspannplatte 8 trägt und die den Zuhaltemechanismus bildet.

Mittels der Kolben-Zylindereinheit 7 wird die verfahrbare Formaufspannplatte 8 während des Spritzvorganges nach rechts gedrückt und die Form dadurch gegen den Forminnendruck geschlossen gehalten.

Bei einer Schließeinheit, bei der die Schließkraft holmlos ausschließlich über den Rahmen 1 übertragen wird, könnte es zu einem Aufklaffen im oberen Werkzeugbereich kommen. Daher ist beim Zylinder der Kolben-Zylindereinheit 7 ein Drehgelenk 5 vorgesehen, das eine horizontale Achse bildet. Die ortsfeste Formaufspannplatte 2 ist ebenfalls mittels eines Drehgelenkes 5' am Maschinenrahmen 1 um eine horizontale Achse kippbar gelagert. Durch die Kippfähigkeit der Stirnplatte 3 und der Formaufspannplatten 2, 8 ist sichergestellt, daß sich die von der bewegbaren Formaufspannplatte 8 getragene Formhälfte 4' bei hoher Schließkraft parallel an die von der ortsfesten Formaufspannplatte 2 getragene Formhälfte 4'' anlegen kann.

Eine Führungsschiene 6 ist direkt an der ortsfesten Formaufspannplatte 2 mittels Schrauben 9 befestigt. Die Führungsschiene 6 macht daher eine Kippbewegung der ortsfesten Formaufspannplatte 2 mit.

Die verfahrbare Formaufspannplatte 8 ist mit einem Gleitschuh 10 ausgerüstet, der die Führungsschiene 6 formschlüssig umfaßt und auf dieser gegen ein Abheben in vertikaler Richtung gesichert geführt ist.

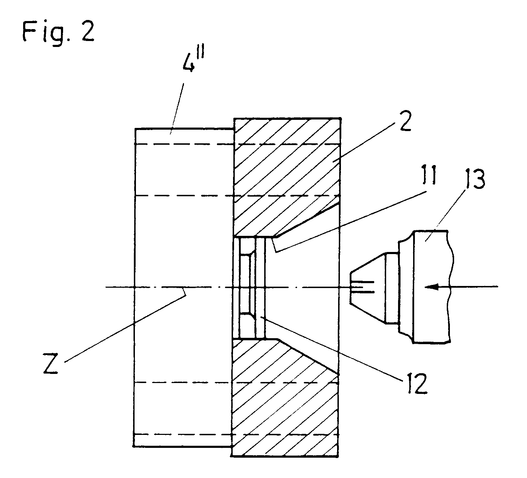

Die Festlegung der Formhälften 4', 4'' an den Formaufspannplatte 8, 2 erfolgt jeweils an der gleichen Stelle. Zur Zentrierung der Formhälften 4', 4'' sind die verschiedensten Konstruktionen bekannt. Beispielsweise ist in Fig. 2 eine Einrichtung gezeigt, bei welcher ein Vorsprung 12 der Formhälfte 4'' in eine Ausnehmung 11 der Formaufspannplatte 2 ragt, wo er durch seitlich eingeschobene Keile verspannt werden kann. Dadurch ist die genaue Ausrichtung zum ortsfest gelagerten Einspritzaggregat 13 sichergestellt, welches auf der Höhe der horizontalen Formmittelebene Z mündet.

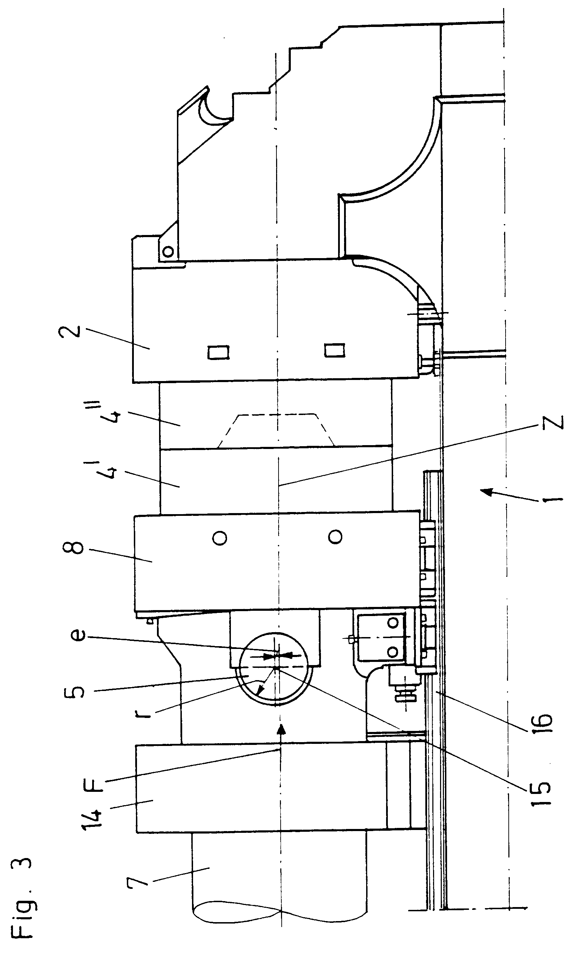

Wie erwähnt, ist das einwandfreie Funktionieren des Drehgelenkes 5 vor allem bei Eingelenksmaschinen von Bedeutung, weil bei diesen die größte Verschwenkung auftritt. Die Erfindung wird daher im einzelnen anhand einer derartigen Maschine, wie sie in Fig. 3 dargestellt ist, erläutert.

Das Drehgelenk 5 ist bei dieser Einrichtung zwischen der auf der Schiene 16 verfahrbaren Formaufspannplatte 8 und der Auswerferplatte 14 angeordnet. Die Einleitung der Schließkraft F erfolgt über den Kolben 7.

Im Drehgelenk 5, dessen Gelenkspalt von der Gelenkachse 15 den Abstand r aufweist, entsteht unter dem Einfluß der Schließkraft F ein Reibmoment µ.F.r, wobei µ der Reibungskoeffizient des gegeneinander gepreßten Flächenpaares ist. Durch die erfindungsgemäße Konstruktion soll ein Drehmoment erzeugt werden, welches ohne Deformation der Form dieses Reibmoment überwindet. Das Drehgelenk 5 wird dazu gegenüber der horizontalen Mittelebene, auf welche die Formhälften 4', 4'' zentriert sind, und gegenüber der Wirkungslinie der Schließkraft F um den Betrag e nach oben versetzt. Das hierdurch entstehende Moment beträgt e.F, so daß das Reibmoment des Drehgelenkes 5 lediglich durch die vorgeschlagene konstruktive Maßnahme überwunden wird, wenn e = µ.r gilt.

Um eine Vorstellung von den auftretenden Kräften und Momenten zu geben, wird anschließend ein Zahlenbeispiel besprochen:

Bei einer Schließkraft F = 2.000 kN beträgt der Gelenksradius, gemessen bis zur Trennfläche von Bolzen und Büchse, 80 mm. Die Reibzahl zwischen Bolzen und Büchse ist unter der Annahme, daß beide Elemente aus Stahl bestehen, µ = 0,1, das auftretende Reibmoment 16.000 kNmm, der außermittige Abstand e, der das Reibmoment aufhebt, beträgt 8 mm.

Bei anderen Materialpaarungen und Gelenkskonstruktionen kann der Reibungskoeffizient von 0,03 bis 0,15 betragen, weshalb typische Abstände der Gelenksachse 15 von der Mittelebene Z zwischen 0,03 r und 0,15 r liegen.

## Patentansprüche

1. Einrichtung zum Spritzgießen von Kunststoff mit einer ortsfesten und einer verfahrbaren Formaufspannplatte, welche Einrichtungen zur Festlegung je einer Formhälfte und damit zur Festlegung der horizontalen Mittelebene der Form aufweisen, wobei mindestens eine Formaufspannplatte relativ zum Maschinenrahmen um eine mittig angeordnete horizontale Achse schwenkbar ist, dadurch gekennzeichnet, daß eine die horizontale Schwenkachse der Formaufspannplatte bildende Einrichtung gegenüber der horizontalen Mittelebene der Form nach oben versetzt ist, indem die Achse (15, 15') eines die Schwenkung einer Formaufspannplatte (2,8) erlaubenden Drehgelenkes (5,5') mit einem Abstand (e) oberhalb der horizontalen Mittelebene (Z) der Form verläuft, welcher kleiner ist als der halbe Radius (r) des Drehgelenkes (5,5').

2. Einrichtung nach Anspruch 1, dadurch gekennzeichnet, daß der Abstand (e) der Achse des Drehgelenkes (5,5') von der horizontalen Mittelebene (Z) der Form zwischen 0,03 und 0,15 bezogen auf den Radius (r) des Drehgelenkes (5,5') beträgt.

3. Einrichtung nach Anspruch 1 oder 2, dadurch gekennzeichnet, daß lediglich die verfahrbare Formaufspannplatte (2) verschwenkbar ist.

## Claims

1. Apparatus for injection molding plastic material comprising a stationary and a movable mold mounting plate which have means for fixing a respective mold half and thus for establishing the horizontal central plane of the mold, wherein at least one mold mounting plate is pivotable relative to the machine frame about a centrally arranged horizontal axis, characterised in that means forming the horizontal pivot axis of the mold mounting plate is displaced upwardly relative to the horizontal central plane of the mold, the axis (15, 15') of a rotary pivot (5, 5') permitting the pivotal movement of a mold mounting plate (2, 8) extending at a spacing (e) above the horizontal central plane (Z) of the mold, which is smaller than half the radius (r) of the rotary pivot (5, 5').

2. Apparatus as set forth in claim 1, characterised in that the spacing (e) of the axis of the rotary pivot (5, 5') from the horizontal central plane (Z) of the mold is between 0.03 and 0.15, with respect to the radius (r) of the pivot (5, 5').

3. Apparatus as set forth in claim 1 or 2, characterised in that only the movable mold mounting plate (2) is pivotable.

## Revendications

1. Dispositif de moulage par injection de matière plastique, comprenant un plateau porte-moule en position fixe et un plateau porte-moule mobile, qui portent des dispositifs, chacun pour fixer et localiser un demi-moule et ainsi localiser le plan médian horizontal du moule, au moins un plateau porte-moule pouvant pivoter par rapport au bâti de machine autour d'un axe horizontal placé de manière centrale, **caractérisé** en ce qu'un dispositif formant l'axe de pivotement horizontal du plateau porte-moule est décalé vers le haut par rapport au plan médian horizontal du moule, par le fait que l'axe (15, 15') d'une articulation de rotation (5, 5') autorisant le pivotement d'un plateau porte-moule (2, 8) s'étend à une distance (e) au-dessus du plan médian horizontal (Z) du moule, cette distance étant inférieure à la moitié du rayon (r) de l'articulation de rotation (5, 5').

2. Dispositif selon la revendication 1, **caractérisé** en ce que la distance (e) de l'axe de l'articulation de rotation (5, 5') au plan médian horizontal (Z) du moule est comprise entre 0,03 et 0,15 fois le rayon (r) de l'articulation de rotation (5, 5').

3. Dispositif selon la revendication 1 ou 2, **caractérisé** en ce que seul le plateau porte-moule mobile (2) peut pivoter.
